# EUROPEAN PATENT APPLICATION

(11) **EP 2 777 933 A1**
(43) Date of publication of application: **17.09.2014**
(21) Application number: 12830851.7
(22) Date of filing: 22.08.2012
(51) Int. Cl.: B32B 27/34, B32B 27/12, B32B 27/20, C08J 5/24, C08K 3/00, C08L 79/00, C08L 79/04, C08L 79/08

(54) **COMPOSITE MATERIAL**

(30) Priority: 09.09.2011 JP 2011197710; 13.06.2012 JP 2012134182
(71) Applicant: National Institute of Advanced Industrial Science and Technology, Tokyo 100-8921 (JP); Japan Matex Co., Ltd., Sennan-shi, Osaka 590-0535 (JP); Sumitomo Seika Chemicals Co., Ltd., Kako-gun, Hyogo 675-0145 (JP)
(72) Inventor: EBINA Takeo, Sendai-shi Miyagi 983-8551 (JP); TSUKAMOTO Katsuro, Sennan-shi Osaka 590-0535 (JP); NAKAMURA Yuzo, Sennan-shi Osaka 590-0535 (JP); IWAMOTO Takuya, Sennan-shi Osaka 590-0535 (JP); FUJIHARA Koji, Sennan-shi Osaka 590-0535 (JP); BANDO Seiji, Kako-gun Hyogo 675-0145 (JP)
(74) Representative: KIPA AB
(86) International application number: PCT/JP2012/071229
(87) International publication number: WO 2013/035538

(57) **Abstract**

Provided is a composite material which can be preferably used as alternative seal materials to asbestos seal materials or as a heat dissipation sheet with excellent thermal conductivity, the composite material composed of:
inorganic filler-containing materials containing an inorganic filler and any of the following: a polyimide film, a polyimide varnish consisting of a polyamide acid solution, an incompletely-imidized and self-standing polyimide precursor film obtained by drying the polyamide acid solution, a polybenzimidazole film, a varnish consisting of a polybenzimidazole solution, a polyazomethinefilm, a mixed film consisting of a polyimide resin and a polybenzimidazole resin, a mixed varnish consisting of the polyamide acid solution and the polybenzimidazole solution, a mixed film consisting of a polyimide precursor and polyazomethine, a polybenzoxazole film etc;
and a molding consisting of any of expanded graphite, organic fiber, or inorganic fiber.

## Description

### Technical field

The present invention relates to a composite material and in particular, to a composite material composed of a polyimide film, a polybenzimidazole film, or polybenzoxazole etc., which contains an inorganic filler; and a molding consisting of expanded graphite etc.

### Background

Since polyimide has excellent characteristics, such as heat resistance, cold resistance, electric insulation, and mechanical strength etc., it is broadly used in a variety of technical fields.

For instance, it is used as a material for forming a protective layer and an insulating layer on a circuit board etc. in electrical and electronic fields.

A two-step method is known as the most industrially common synthetic method of making polyimide. The two-step method comprises the steps of polymerizing tetracarboxylic acid dihydrate and diamine in equimolar amounts to obtain polyamide acid (polyamic acid), which is a precursor of polyimide, and proceeding with a dehydration and cyclization (imidization) reaction by heating this polyamide acid to more than 200 °C or using a catalyst to thereby obtaining polyimide.

While polyimide may be industrially used in the form of a completely-imidized polyimide film, it is more often used in the form of a polyimide varnish consisting of a polyamide acid solution, and in the form of an incompletely-imidized polyimide precursor film obtained from drying of the polyamide acid solution.

In particular, the polyimide varnish (polyamide acid solution) is applied to an object, such as a substrate, and the polyimide precursor film is bonded to the object, such as a substrate. The applied polyimide varnish and the adhered polyimide precursor film are imidized by heating, thereby forming a polyimide layer.

However, the polyimide varnish and the polyimide precursor film have poor storage stability. If they are stored at room temperature, polyamide acid is depolymerized to acid anhydride and aromatic amine, and amide-exchange reaction between the produced acid anhydride and an amino group of other molecular chains decreases their average molecular weight and accordingly causes deterioration of adhesiveness and embrittlement of the film. Therefore, the polyimide varnish and the polyimide precursor film have the problem that they require refrigerated storage and are difficult to be handled.

While the polyimide film has very excellent characteristics, such as heat resistance, cold resistance, electric insulation, and mechanical strength etc., as described above, these characteristics should be further enhanced (for example, heat resistance must be improved) and insufficient characteristics, such as thermal conductivity and vapor barrier properties etc. should be improved, depending on the intended use. For example, if the polyimide film is applied to a seal material, vapor barrier property needs to be improved, and if it is applied to a heat dissipation sheet, thermal conductivity needs to be improved.

Polybenzimidazole (PBI) is a thermally and chemically stable heterocyclic macromolecule and has excellent heat resistance and abrasion resistance. For that reason, it is expected to be used as a protecting film etc. in the semiconductor field etc., as well as polyimide, while its characteristics need to be further enhanced or improved, depending on the intended use.

Polybenzoxazole (PBO) has characteristics, such as heat resistance, cold resistance, electric insulation, mechanical strength and the like equivalent to polyimide. Therefore, it is used as a material for forming a protective layer and an insulating layer on a circuit board, for example, in electrical and electronic fields, while its characteristics must be further enhanced or improved, depending on the intended use.

Conventionally, an asbestos sheet joint gasket, which has excellent characteristics in a wide temperature range from a low temperature region (about -240 °C) to a high temperature region (about +400 °C), was widely used for a seal material such as a packing, a gasket, and the like. However, the use of asbestos was prohibited in principle and alternative materials have been sought since then.

Among the currently-used materials of a seal material, expanded graphite is the only material which can respond to the above-mentioned wide temperature range, but it cannot be the perfect alternative because it has a drawback that it possibly causes powders to fall from electric corrosion or surface (contamination).

Furthermore, expanded graphite has excellent thermal conductivity and thus is also used for materials of the heat dissipation sheet for diffusing heat generated from electronic components used for electric products, such as liquid crystal television etc (for example, see the following patent document 1).

However, when an expanded graphite sheet is used as a heat dissipation sheet, an adhesive layer such as a pressure sensitive adhesive or a double-sided adhesive tape is necessary for fixing the expanded graphite sheet to an electronic component mounting board. The adhesive layer prevents thermal conductivity of the expanded graphite, leading to less beneficial heat dissipation effect.

In addition, the expanded graphite also has a problem of contamination by powder fall, since it has conductive property. Therefore, when it is used as a heat dissipation sheet, a masking film should be provided on surface in order to ensure insulation performance and to prevent contamination, leading to prevention of thermal conductivity by the masking film.

### Prior-Art Documents

### Patent documents

Patent Document 1 JP Tokukai 2005-229100

### SUMMARY OF THE INVENTION

### Problems to be solved by the Invention

The present invention addresses the above-described problems of the prior art and aims to provide a composite material, which can be preferably used as an alternative to asbestos seal materials or as a heat dissipation sheet with excellent thermal conductivity, by improving characteristics of polyimide, polybenzimidazole, or polybenzoxazole and by combining these with known seal materials such as expanded graphite etc and materials for the heat dissipation sheet.

### Means to solve the problems

Invention according to claim 1 relates to a composite material composed of an inorganic filler-containing material containing an inorganic filler and any of the following: a polyimide film, a polyimide varnish consisting of a polyamide acid solution, an incompletely-imidized and self-standing polyimide precursor film obtained by drying the polyamide acid solution, a polybenzimidazole film, a varnish consisting of a polybenzimidazole solution, a polyazomethine film, a mixed film consisting of a polyimide resin and a polybenzimidazole resin, a mixed varnish consisting of the polyamide acid solution and the polybenzimidazole solution, a mixed film consisting of a polyimide precursor and polyazomethine, a polybenzoxazole film, a polybenzoxazole varnish consisting of a polyamide acid solution having phenol region, an incompletely-converted-to-oxazole and self-standing polybenzoxazole precursor film obtained by drying the varnish consisting of the polyamide acid solution having phenol region, a mixed film consisting of the polyimide resin and the polybenzoxazole resin, a mixed varnish consisting of the polyamide acid solution and a polybenzoxazole precursor solution, a mixed film consisting of the polyimide precursor and a polybenzoxazole precursor, a polyimide-polybenzoxazole copolymer film obtained by copolymerizing the polyimide resin and the polybenzoxazole resin, a varnish consisting of a polyimide-polybenzoxazole copolymer precursor solution which copolymerized the polyamide acid and the polyamide acid having phenol region, an incompletely-imidized and - converted-to-oxazole and self-standing polyimide-polybenzoxazole copolymer precursor film obtained by drying the polyimide-polybenzoxazole copolymer precursor solution; and a molding consisting of any of expanded graphite, organic fiber, or inorganic fiber.

The invention according to claim 2 relates to a composite material of claim 1, wherein an inorganic filler containing layer formed of said inorganic filler-containing material is provided on outer surface of said molding.

The invention according to claim 3 relates to a composite material comprising an inorganic filler-containing material inside a molding consisting of any of expanded graphite, organic fiber, or inorganic fiber, wherein the inorganic filler-containing material contains an inorganic filler and any of the following: a polyimide varnish consisting of a polyamide acid solution, a varnish consisting of a polybenzimidazole solution, a mixed varnish consisting of the polyamide acid solution and the polybenzimidazole solution, a polybenzoxazole varnish consisting of a polyamide acid having phenol region, a mixed varnish consisting of the polyamide acid solution and a polybenzoxazole precursor solution, a varnish consisting of a polyimide-polybenzoxazole copolymer precursor solution which copolymerized the polyamide acid and the polyamide acid having phenol region.

The invention according to claim 4 relates to a composite material of any of claims 1 to 3, wherein said inorganic filler consists of clay.

The invention according to claim 5 relates to a composite material of any of claims 1 to 3, wherein said inorganic filler consists of a silicate compound.

### Effects of the Invention

According to the invention of claim 1, a composite material is composed of an inorganic filler-containing material containing an inorganic filler and any of the following: a polyimide film, a polyimide varnish consisting of a polyamide acid solution, an incompletely-imidized and self-standing polyimide precursor film obtained by drying the polyamide acid solution, a polybenzimidazole film, a varnish consisting of a polybenzimidazole solution, a polyazomethine film, a mixed film consisting of a polyimide resin and a polybenzimidazole resin, a mixed varnish consisting of a polyamide acid solution and a polybenzimidazole solution, a mixed film consisting of a polyimide precursor and polyazomethine, a polybenzoxazole film, a polybenzoxazole varnish consisting of the polyamide acid solution having phenol region, an incompletely-converted-to-oxazole and self-standing polybenzoxazole precursor film obtained by drying the varnish consisting of the polyamide acid solution having phenol region, a mixed film consisting of a polyimide resin and a polybenzoxazole resin, a mixed varnish consisting of a polyamide acid solution and a polybenzoxazole precursor solution, a mixed film consisting of a polyimide precursor and a polybenzoxazole precursor, a polyimide-polybenzoxazole copolymer film obtained by copolymerizing a polyimide resin and a polybenzoxazole resin, a varnish consisting of a polyimide-polybenzoxazole copolymer precursor solution which copolymerized polyamide acid and polyamide acid having phenol region, an incompletely-imidized and -converted-to-oxazole and self-standing polyimide polybenzoxazole copolymer precursor films obtained by drying a polyimide-polybenzoxazole copolymer precursor solution; and a molding consisting of any of expanded graphite, organic fiber, or inorganic fiber. Therefore, a composite material can be additionally obtained, wherein original excellent characteristics (heat resistance etc.) of polyimide, polybenzimidazole, and polybenzoxazole can be further enhanced due to excellent characteristics (heat resistance etc.) of the inorganic filler, and insufficient characteristics, such as thermal conductivity and vapor barrier property etc. can be improved by appropriately selecting types of the inorganic filler.

According to the invention of claim 2, a composite material is obtained, wherein an inorganic filler containing layer formed of said inorganic filler-containing material is provided on outer surface of said molding, and thus it has high heat resistance and seal performance, has no powder fall, and has excellent insulation performance.

According to the invention of claim 3, a composite material comprising an inorganic filler-containing material inside a molding consisting of any of expanded graphite, organic fiber, or inorganic fiber is obtained, wherein the inorganic filler-containing material contains an inorganic filler and any of the following: the polyimide varnish consisting of the polyamide acid solution, the varnish consisting of the polybenzimidazole solution, the mixed varnish consisting of the polyamide acid solution and the polybenzimidazole solution, the polybenzoxazole varnish consisting of the polyamide acid having phenol region, a mixed varnish consisting of the polyamide acid solution and a polybenzoxazole precursor solution, the varnish consisting of the polyimide-polybenzoxazole copolymer precursor solution which copolymerized polyamide acid and polyamide acid having phenol region, and thus the composite material has high heat resistance, excellent seal performance, and insulation performance.

According to the invention of claim 4, a composite material is obtained wherein it has excellent seal performance, insulation performance, chemical resistance, and vapor barrier property, since it consists of clay.

According to the invention of claim 5, a composite material is obtained, wherein it has seal performance and small sliding resistance, since it consists of a silicate compound.

### Brief Description of Figures

Figure 1 shows a seal material consisting of a composite material according to the present invention, and (a) is a top view and (b) is a longitudinal sectional view.
Figure 2 shows a seal material consisting of a composite material according to the present invention in the form of a multilayer structure, and (a) is a top view and (b) is a longitudinal sectional view.
Figure 3 is a perspective view showing a heat dissipation sheet according to the present invention.

### Detailed Description of the Invention

Hereinafter, preferred embodiments of the composite material according to the present invention will be set forth.

The composite material according to the present invention is composed of an inorganic filler-containing material containing an inorganic filler and any of the following: a polyimide film, a polyimide varnish consisting of a polyamide acid solution, an incompletely-imidized and self-standing polyimide precursor film obtained by drying the polyamide acid solution, a polybenzimidazole film, a varnish consisting of a polybenzimidazole solution, a polyazomethine film, a mixed film consisting of a polyimide resin and a polybenzimidazole resin, a mixed varnish consisting of a polyamide acid solution and a polybenzimidazole solution, a mixed film consisting of a polyimide precursor and polyazomethine, a polybenzoxazole film, a polybenzoxazole varnish consisting of the polyamide acid solution having phenol region, an incompletely-converted-to-oxazole and self-standing polybenzoxazole precursor film obtained by drying the varnish consisting of the polyamide acid solution having phenol region, a mixed film consisting of a polyimide resin and a polybenzoxazole resin, a mixed varnish consisting of a polyamide acid solution and a polybenzoxazole precursor solution, a mixed film consisting of a polyimide precursor and a polybenzoxazole precursor, a polyimide-polybenzoxazole copolymer film obtained by copolymerizing a polyimide resin and a polybenzoxazole resin, a varnish consisting of a polyimide-polybenzoxazole copolymer precursor solution which copolymerized polyamide acid and polyamide acid having phenol region, an incompletely-imidized and -converted-to-oxazole and self-standing polyimide polybenzoxazole copolymer precursor films obtained by drying a polyimide-polybenzoxazole copolymer precursor solution; a molding consisting of expanded graphite, organic fiber, or inorganic fiber.

A first embodiment of an inorganic filler-containing material used as a raw material of the composite material according to the present invention is a polyimide film containing an inorganic filler. Types of the inorganic filler are not particularly limited, but one or two or more kinds of mixtures selected from clay, a silicate compound, a nitride, and an inorganic oxide are preferably used.

One or more types of natural clay, synthetic clay, and modified clay can be used. More particularly, one or more types of mica, vermiculite, montmorillonite, beidellite, hectorite, stevensite, Magadiite, ilerite, kanemite, illite, sericite, or nontronite is preferably used.

A silicate compound such as talc, kaolin, zeolite, halloysite, or vermiculite, etc. is preferably used, but is not limited to these. A nitride such as boron nitride, aluminium nitride, silicon nitride, etc. is preferably used, but is not limited to these.

An inorganic oxide such as alumina, magnesium oxide, silicon dioxide, zinc oxide, zirconium dioxide, etc. is preferably used, but is not limited to these.

Content of the inorganic filler is preferably 10 to 90 % by weight, more preferably 30 to 70 % by weight.

The reason is that when the content of the inorganic filler is less than 10 % by weight, it does not exert some of its characteristics (heat resistance, seal performance, thermal conductivity, or abrasion resistance) well, and when the content is over 90 % by weight, it becomes more fragile and less flexible, neither of which is preferable.

The first embodiment of the inorganic filler-containing material used as a raw material of the composite material according to the present invention, polyimide film (hereinafter, referred to as the polyimide film), contains the inorganic filler and thus can impart the characteristics of the inorganic filler to the polyimide film. For example, the inorganic filler has better heat resistance compared with polyimide, and thus can enhance heat resistance of the polyimide film. Additionally, the inorganic filler can impart its stiffness to the polyimide film and thus the polyimide film, which is less likely to shrink (curl) after it is dried or cured, can be obtained.

If the inorganic filler consists of clay (especially, plate crystal clay (clay mineral belonging to a layered silicate)), a polyimide film with excellent seal performance, insulation performance, chemical resistance, and vapor barrier properties, can be obtained.

If the inorganic filler consists of a silicate compound, a nitride, and an inorganic oxide, a polyimide film with excellent thermal conductivity can be obtained.

The polyimide film can be manufactured by a method using the following two-step methods:

Polymerize tetracarboxylic acid dihydrate and diamine in equimolar amounts to obtain a polyamide acid (polyamic acid) which is a precursor of the polyimide (First Step).

Dissolve the polyamide acid in an organic solvent, and add an inorganic filler to the organic solvent (Second Step).

Dry the solution (polyamide acid solution with the inorganic filler) at low temperature (about 90 °C) to obtain a film (a polyimide precursor film) (Third Step).

Complete dehydration and cyclization (imidization) by heating this film (the polyimide precursor film) to more than 200 °C or by using a catalyst, in order to obtain the polyimide film (Fourth Step).

A second embodiment of the inorganic filler-containing material used as a raw material of the composite material according to the present invention is a polyimide varnish consisting of the polyamide acid solution containing the inorganic filler.

The second embodiment of the inorganic filler-containing material used as the raw material of the composite material according to the present invention, a polyimide varnish (hereinafter, referred to as the polyimide varnish) can be manufactured by the above-mentioned first and second steps of the method of manufacturing this polyimide film.

That is, the polyimide varnish can be obtained in the process (intermediate steps) of manufacturing the polyimide film.

The polyimide varnish contains the inorganic filler and thus can be stored at room temperature and has excellent storage stability.

That is, as mentioned above, if a conventional polyimide varnish is stored at room temperature, polyamide acid is depolymerized to acid anhydride and aromatic amine, and amide-exchange reaction between the produced acid anhydride and an amino group of other molecular chains decreases their average molecular weight and accordingly causes deterioration of adhesiveness of the film etc.

However, since the polyimide varnish contains the inorganic filler, the above-mentioned depolymerization of the polyamide acid is prevented and the average molecular weight is less likely to decrease, leading to the polyimide varnish which can be stored at room temperature and has excellent storage stability.

The polyimide varnish is applied to an object and then imidized by heating, thereby allowing a polyimide membrane to be formed on an outer surface of the object.

As mentioned above, the polyimide varnish contains the inorganic filler. Therefore, the polyimide membrane obtained by applying the polyimide varnish to the object and heating it can demonstrate the high heat resistance of the inorganic filler. Furthermore, by selecting the inorganic filler appropriately, it is possible to obtain a polyimide membrane maintaining the original excellent characteristics of polyimide and having its insufficient characteristics (such as thermal conductivity and vapor barrier property etc.) improved.

If the inorganic filler consists of clay (especially, plate crystal clay), a polyimide membrane with excellent seal performance, insulation performance, chemical resistance, and vapor barrier property, can be obtained.

If the inorganic filler consists of a silicate compound, a nitride, and an inorganic oxide, a polyimide membrane with excellent thermal conductivity can be obtained.

A third embodiment of the inorganic filler-containing material used as the raw material of the composite material according to the present invention is an incompletely-imidized and self-standing (self-supporting) polyimide precursor film obtained by drying a polyamide acid solution containing an inorganic filler. Self-standing property (self-supporting property) means that a film alone can maintain its form without any support.

The third embodiment of the raw material of the composite material according to the present invention, the polyimide precursor film (hereinafter, referred to as the polyimide precursor film), can be manufactured by the above-mentioned first to third steps of the method of manufacturing the polyimide film.

In other words, the polyimide precursor film can be obtained in the process (intermediate steps) of manufacturing the polyimide film.

The polyimide precursor film contains the inorganic filler, and thus it can be stored at room temperature and has excellent storage stability.

That is, as mentioned above, if a conventional polyimide precursor film is stored at room temperature, polyamide acid is depolymerized to acid anhydride and aromatic amine, and amide-exchange reaction between the produced acid anhydride and an amino group of other molecular chains decreases their average molecular weight and accordingly causes deterioration of adhesiveness and embrittlement of the film.

However, since the polyimide precursor film contains the inorganic filler, the above-mentioned depolymerization of the polyamide acid is prevented and the average molecular weight is less likely to decrease, leading to the polyimide precursor film which can be stored at room temperature and has excellent storage stability.

The polyimide precursor film has an adhesive property in itself and thus can be used as an adhesive film. Therefore, after the polyimide precursor film adheres to an object and then is imidized by heating, a polyimide membrane can be formed on an outer surface of the object.

As described above, the polyimide precursor film contains the inorganic filler. Therefore, the polyimide membrane obtained by bonding the polyimide precursor film to the object and heating it can demonstrate the high heat resistance of the inorganic filler. Furthermore, by selecting the inorganic filler appropriately, it is possible to obtain a polyimide membrane maintaining the original excellent characteristics of polyimide and having its insufficient characteristics (such as thermal conductivity and vapor barrier property etc.) improved.

If the inorganic filler consists of clay (especially, plate crystal clay), a polyimide membrane with excellent seal performance, insulation performance, chemical resistance, and vapor barrier property, can be obtained.

If the inorganic filler consists of a silicate compound, a nitride, and an inorganic oxide, a polyimide membrane with excellent thermal conductivity can be obtained.

A fourth embodiment of the inorganic filler-containing material used as the raw material of the composite material according to the present invention is a polybenzimidazole film containing an inorganic filler.

Here, polybenzimidazole is a polymer which contains a substituted or unsubstituted benzimidazole as a monomer unit. Specifically, it is, for example, poly-2,2'-(m-phenylene)-5,5'-bibenzimidazole and the like. Types and content of the inorganic filler are the same as those of the above-mentioned first embodiment.

The fourth embodiment of the inorganic filler-containing material used as the raw material of the composite material according to the present invention, the polybenzimidazole film (hereinafter, referred to as the polybenzimidazole film), contains the inorganic filler, thus it can be imparted the characteristics of the inorganic filler. For example, since the inorganic filler has better heat resistance compared with the polybenzimidazole film, it is possible to enhance heat resistance of the polybenzimidazole film. Furthermore, since the polybenzimidazole film is imparted the stiffness of the inorganic filler, it can be less likely to shrink (curl) after it is dried or cured.

If the inorganic filler consists of clay (especially, plate crystal clay (clay mineral belonging to a layered silicate)), the polybenzimidazole film with excellent seal performance, insulation performance, chemical resistance, and vapor barrier property, can be obtained.

If the inorganic filler consists of a silicate compound, a nitride, and an inorganic oxide, the polybenzimidazole film with excellent thermal conductivity can be obtained.

The polybenzimidazole film can be manufactured, for example, by the following methods:

Dissolve Polybenzimidazole (PBI) in a solvent to obtain a PBI solution (First Step). N,N-dimethylacetamide, N, N-dimethylformamide, Dimethyl sulfoxide, N-methyl-2-pyrrolidone, dimethylacetamide (DMA), dimethylformamide (DMF), pyridine, dimethylsulfoxide (DMSO) etc. are used for the solvent.

Add the inorganic filler to this PBI solution (Second Step).

Apply the PBI solution with the inorganic filler on an outer surface of a base to form a coating film on the outer surface of the base (Third Step).

Remove the solvent by heating this coating film at low temperature (about 90-100 °C) in order to obtain a polyazomethine film (Fourth Step).

Bake (burn) this polyazomethine film (for example, at approximately 300-350 °C) to form a cured coating film (Fifth Step).

Separate this cured coating film from the base to obtain the polybenzimidazole film (Sixth Step).

A fifth embodiment of the inorganic filler-containing material used as the raw material of the composite material according to the present invention is a varnish consisting of a polybenzimidazole solution containing an inorganic filler.

The fifth embodiment of the inorganic filler-containing material used as the raw material of the composite material according to the present invention, the varnish consisting of the polybenzimidazole solution (hereinafter referred to as the polybenzimidazole varnish), can be manufactured by the above-mentioned first and second steps of the method of manufacturing the polybenzimidazole film.

That is, the polybenzimidazole varnish can be obtained in the process (intermediate steps) of manufacturing the polybenzimidazole film.

The polybenzimidazole varnish contains the inorganic filler and thus it can be stored at room temperature and has excellent storage stability.

The polybenzimidazole varnish is applied to an object and then baked (burned), thereby allowing a polybenzimidazole membrane to be formed on an outer surface of the object.

As mentioned above, the polybenzimidazole varnish contains the inorganic filler. Therefore, the polybenzimidazole membrane obtained by applying to the object and baking the polybenzimidazole varnish can demonstrate the high heat resistance of the inorganic filler. Furthermore, by selecting the inorganic filler appropriately, it is possible to obtain a polybenzimidazole membrane maintaining the original excellent characteristics of polybenzimidazole and having its insufficient characteristics (such as thermal conductivity and vapor barrier property etc.) improved.

If the inorganic filler consists of clay (especially, plate crystal clay), a polybenzimidazole membrane with excellent seal performance, insulation performance, chemical resistance, and vapor barrier property, can be obtained.

If the inorganic filler consists of a silicate compound, a nitride, and an inorganic oxide, a polybenzimidazole membrane with excellent thermal conductivity can be obtained.

A sixth embodiment of the inorganic filler-containing material used as the raw material of the composite material according to the present invention is a polyazomethine film containing an inorganic filler. Polyazomethine is a precursor of polybenzimidazole. Examples of polyazomethine and polyazomethine films are described, for example, in the patent publication of Tokukai JP 2008-266538.

The sixth embodiment of the inorganic filler-containing material used as the raw material of the composite material according to the present invention, polyazomethine film (hereinafter, referred to as the polyazomethine film) can be manufactured by the above-mentioned first to fourth steps of the method of manufacturing the polybenzimidazole film.

That is, the polyazomethine film can be obtained in the process (intermediate steps) of manufacturing the polybenzimidazole film.

The polyazomethine film has an adhesive property in itself and thus can be used as an adhesive film. Therefore, the polyazomethine film adheres to an object and is then baked (burned), thereby allowing a polybenzimidazole membrane to be formed on an outer surface of the object.

As described above, the polyazomethine film contains the inorganic filler. Therefore, the polybenzimidazole membrane obtained by bonding the polyazomethine film to the object and baking it can demonstrate the high heat resistance of the inorganic filler. Furthermore, by selecting the inorganic filler appropriately, it is possible to obtain a polybenzimidazole membrane maintaining the original excellent characteristics of polybenzimidazole and having its insufficient characteristics (such as thermal conductivity and vapor barrier property etc.) improved.

If the inorganic filler consists of clay (especially, plate crystal clay), the polybenzimidazole membrane with excellent seal performance, insulation performance, chemical resistance, and vapor barrier property, can be obtained.

If the inorganic filler consists of a silicate compound, a nitride, and an inorganic oxide, the polybenzimidazole membrane with excellent thermal conductivity can be obtained.

A seventh embodiment of the inorganic filler-containing material used as the raw material of the composite material according to the present invention is a mixed film consisting of a polyimide resin and a polybenzimidazole resin and containing an inorganic filler.

The mixed film (hereinafter, referred to as mixed film 1) is obtained by, for example, adding the inorganic filler to a mixture of a solution prepared by dissolving in an organic solvent a polyamide acid obtained in the middle of the second step (before combination of the inorganic filler) of the above-mentioned manufacturing method of the polyimide film and the PBI solution obtained in the first step of the above-mentioned manufacturing method of the polybenzimidazole film; heating the solution with the inorganic filler at low temperature (about 90-100 °C) to obtain a mixed film comprising a polyimide precursor and polyazomethine; and heating or baking the mixed film at high temperature (about 300-350 °C).

Types and content of the inorganic filler are the same as those of the above-mentioned first embodiment.

Mixed film 1 has characteristics of the above-mentioned polyimide film and polybenzimidazole film.

An eighth embodiment of the inorganic filler-containing material used as the raw material of the composite material according to the present invention is a mixed varnish consisting of a polyamide acid solution and a polybenzimidazole solution and containing an inorganic filler.

The mixed varnish (hereinafter, referred to as mixed varnish 1) is obtained by, for example, combining the inorganic filler with a mixture of a solution prepared by dissolving in an organic solvent a polyamide acid obtained in the middle of the second step (before combination of the inorganic filler) of the above-mentioned manufacturing method of the polyimide film and the PBI solution obtained in the first step of the above-mentioned manufacturing method of the polybenzimidazole film.

Types and content of the inorganic filler are the same as those of the above-mentioned first embodiment.

Mixed varnish 1 has characteristics of the above-mentioned polyimide varnish and the polybenzimidazole varnish.

A ninth embodiment of the inorganic filler-containing material used as the raw material of the composite material according to the present invention is a mixed film containing an inorganic filler and comprising a polyimide precursor and polyazomethine.

This mixed film (hereinafter, referred to as mixed film 2) is obtained by, for example, combining the inorganic filler with a mixture of a solution prepared by dissolving in an organic solvent a polyamide acid obtained in the middle of the second step (before combination of the inorganic filler) of the above-mentioned manufacturing method of the polyimide film and the PBI solution obtained in the first step of the above-mentioned manufacturing method of the polybenzimidazole film; and heating the mixed solution with this inorganic filler at low temperature (about 90-100 °C).

Mixed film 2 has characteristics of the above-mentioned polyimide precursor film and polyazomethine film.

A tenth embodiment of the inorganic filler-containing material used as the raw material of the composite material according to the present invention is a polybenzoxazole film containing an inorganic filler.

Here, polybenzoxazole is a polymer containing a substituted or unsubstituted benzoxazole as a monomer unit. Specifically, it is, for example, poly(paraphenylenebenzobisoxazole, poly-2,2'-(p-phenylene)-5,5'-bibenzoxazole and the like.

Types and content of the inorganic filler are the same as those of the above-mentioned first embodiment.

The tenth embodiment of the inorganic filler-containing material used as the raw material of the composite material according to the present invention, the polybenzoxazole film (hereinafter, referred to as the polybenzoxazole film), contains the inorganic filler and thus it can be imparted the characteristics of the inorganic filler. For example, since the inorganic filler has better heat resistance compared with a polybenzoxazole film, it is possible to enhance heat resistance of a polybenzoxazole film. Furthermore, since the polybenzoxazole film is imparted the stiffness of the inorganic filler, it can be less likely to shrink (curl) after it is dried or cured.

If the inorganic filler consists of clay (especially, plate crystal clay (clay mineral belonging to a layered silicate)), the polybenzoxazole film with excellent seal performance, insulation performance, chemical resistance, and vapor barrier property, can be obtained.

If the inorganic filler consists of a silicate compound, a nitride, and an inorganic oxide, the polybenzoxazole film with excellent thermal conductivity can be obtained.

The polybenzoxazole film can be manufactured, for example, by following methods:

Polymerize tetracarboxylic acid dihydrate and a bisaminophenol compound in equimolar amounts to obtain a polyamide acid (polyamic acid) having phenol region, which is a polybenzoxazole precursor (First Step).

Dissolve the polyamide acid in an organic solvent and add an inorganic filler to an organic solvent (Second Step).

Dry this mixture (polyamide acid solution with the inorganic filler) at low temperature (about 90 °C) to obtain a film (a polybenzoxazole precursor film) (Third Step).

Complete dehydration and cyclization (conversion to oxazole) by heating this film (the polybenzoxazole precursor film) to more than 200 °C or by using a catalyst, in order to obtain the polybenzoxazole film (Fourth Step).

An eleventh embodiment of the inorganic filler-containing material used as the raw material of the composite material according to the present invention is a varnish consisting of a polybenzoxazole precursor solution containing an inorganic filler.

The eleventh embodiment of the inorganic filler-containing material used as the raw material of the composite material according to the present invention, the varnish consisting of the polybenzoxazole precursor solution (hereinafter, referred to as the polybenzoxazole varnish), can be manufactured by the above-mentioned first and second steps of the method of manufacturing this polybenzoxazole.

That is, the polybenzoxazole varnish can be obtained in the process (intermediate steps) of manufacturing the polybenzoxazole.

The polybenzoxazole varnish contains the inorganic filler and thus it can be stored at room temperature and has excellent storage stability.

The polybenzoxazole varnish is applied to an object, heated, and then converted to an oxazole, thereby allowing a polybenzoxazole membrane to be formed on an outer surface of the object.

As mentioned above, this polybenzoxazole varnish contains the inorganic filler. Therefore, the polybenzoxazole membrane obtained by applying to the object and baking the polybenzoxazole varnish can demonstrate the high heat resistance of the inorganic filler. Furthermore, by selecting the inorganic filler appropriately, it is possible to obtain a polybenzoxazole membrane maintaining the original excellent characteristics of polybenzoxazole and having its insufficient characteristics (such as thermal conductivity and vapor barrier property etc.) improved.

If the inorganic filler consists of clay (especially, plate crystal clay), a polybenzoxazole membrane with excellent seal performance, insulation performance, chemical resistance, and vapor barrier property, can be obtained.

If an inorganic filler consists of a silicate compound, a nitride, and an inorganic oxide, a polybenzoxazole membrane with excellent thermal conductivity can be obtained.

A twelfth embodiment of the inorganic filler-containing material used as the raw material of the composite material according to the present invention is an incompletely-converted-to-oxazole and self-standing (self-supporting) polybenzoxazole precursor film obtained by drying a polybenzoxazole precursor solution containing an inorganic filler.

The twelfth embodiment of the raw material of the composite material according to the present invention, the polybenzoxazole precursor film (hereinafter, referred to as the polybenzoxazole precursor film), can be manufactured by the above-mentioned first to third steps of the method of manufacturing the polybenzoxazole film.

That is, the polybenzoxazole precursor film can be obtained in the process (intermediate steps) of manufacturing the polybenzoxazole.

The polybenzoxazole precursor film contains the inorganic filler and thus it can be stored at room temperature and has excellent storage stability.

That is, as mentioned above, if a conventional polybenzoxazole precursor film is stored at room temperature, polyamide acid is depolymerized to acid anhydride and aromatic amine, and amide-exchange reaction between the produced acid anhydride and an amino group of other molecular chains decreases their average molecular weight and accordingly causes deterioration of adhesiveness and embrittlement of the film.

However, since the polybenzoxazole precursor contains the inorganic filler, the above-mentioned depolymerization of the polyamide acid with a phenol region is prevented and the average molecular weight is less likely to decrease, leading to the polybenzoxazole precursor film which can be stored at room temperature and has excellent storage stability.

The polybenzoxazole precursor film has an adhesive property in itself and thus can be used as an adhesive film. Therefore, after the polybenzoxazole precursor film adheres to an object and then is converted to an oxazole by heating, a polybenzoxazole membrane can be formed on an outer surface of the object.

As described above, the polybenzoxazole precursor film contains the inorganic filler. Therefore, the polybenzoxazole membrane obtained by bonding the polybenzoxazole varnish to the object and heating it can demonstrate the high heat resistance of the inorganic filler. Furthermore, by selecting the inorganic filler appropriately, it is possible to obtain a polybenzoxazole membrane maintaining the original excellent characteristics of polybenzoxazole and having its insufficient characteristics (such as thermal conductivity and vapor barrier property etc.) improved.

If the inorganic filler consists of clay (especially, plate crystal clay), a polybenzoxazole membrane with excellent seal performance, insulation performance, chemical resistance, and vapor barrier property, can be obtained.

If an inorganic filler consists of a silicate compound, a nitride, and an inorganic oxide, a polybenzoxazole membrane with excellent thermal conductivity can be obtained.

A thirteenth embodiment of the inorganic filler-containing material used as a raw material of the composite material according to the present invention is a mixed film containing an inorganic filler and containing a polyimide resin and a polybenzoxazole resin.

This mixed film (hereinafter, referred to as mixed film 3) is obtained by, for example, combining the inorganic filler with a mixture of a solution prepared by dissolving in an organic solvent a polyamide acid obtained during the first step of the above-mentioned manufacturing method of the polyimide film and a polyamide acid with a phenol region obtained during the first step of the above-mentioned manufacturing method of the polybenzoxazole film; heating the mixture with the inorganic filler at low temperature (about 90-100 °C) to obtain a mixed film consisting of a polyimide precursor and polybenzoxazole precursor; and heating or baking this mixed film at high temperature (about 300-350 °C).

Types and content of the inorganic filler are the same as those of the above-mentioned first embodiment.

Mixed film 3 has characteristics of the above-mentioned polyimide film and polybenzoxazole film.

A fourteenth embodiment of the inorganic filler-containing material used as the raw material of the composite material according to the present invention is a mixed varnish comprising a polyamide acid solution and a polybenzoxazole precursor solution and containing an inorganic filler.

This mixed varnish (hereinafter, referred to as mixed varnish 2) is obtained by, for example, combining the inorganic filler with a mixture of a solution prepared by dissolving in an organic solvent a polyamide acid obtained during the first step of the above-mentioned manufacturing method of the polyimide film and a polyamide acid with a phenol region obtained during the first step of the above-mentioned manufacturing method of the polybenzoxazole film.

Types and content of the inorganic filler are the same as those of the above-mentioned first embodiment.

Mixed varnish 2 has characteristics of the above-mentioned polyimide varnish and polybenzoxazole varnish.

A fifteenth embodiment of the inorganic filler-containing material used as the raw material of the composite material according to the present invention is a mixed film consisting of a polyimide precursor and a polybenzoxazole precursor, and containing an inorganic filler.

This mixed film (hereinafter, referred to as mixed film 4) is obtained by, for example, combining the inorganic filler with a mixture of a solution prepared by dissolving in an organic solvent a polyamide acid obtained during the first step of the above-mentioned manufacturing method of the polyimide film and a polyamide acid with a phenol region obtained during the first step of the above-mentioned manufacturing method of the polybenzoxazole; and heating the mixed solution with this inorganic filler at low temperature (about 90-100 °C).

Types and content of the inorganic filler are the same as those of the above-mentioned first embodiment.

Mixed film 4 has characteristics of the above-mentioned polyimide precursor film and polybenzoxazole precursor film.

A sixteenth embodiment of the inorganic filler-containing material used as the raw material of the composite material according to the present invention is a polyimide polybenzoxazole copolymer film containing an inorganic filler.

Here, polyimide polybenzoxazole copolymer is a copolymer containing a substituted or unsubstituted benzoxazole as a monomer unit.
In particular, there is a structure, for example shown in a Formula (Formula 1).

Types and content of the inorganic filler are the same as those of the above-mentioned first embodiment.

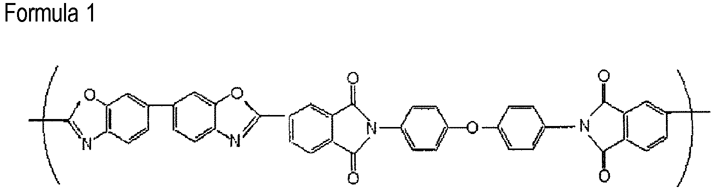

The sixteenth embodiment of the inorganic filler-containing material used as the raw material of the composite material according to the present invention, the polyimide polybenzoxazole copolymer film (hereinafter, referred to as the copolymer film), contains the inorganic filler and thus it can be imparted the characteristics of the inorganic filler. For example, since the inorganic filler has better heat resistance compared with the polyimide polybenzoxazole copolymer film, it is possible to enhance heat resistance of the polyimide polybenzoxazole copolymer film. Furthermore, since the copolymer film is imparted the stiffness of the inorganic filler, it can be less likely to shrink (curl) after it is dried/cured.

If the inorganic filler consists of clay (especially, plate crystal clay (clay mineral belonging to a layered silicate)), the polyimide polybenzoxazole copolymer with excellent seal performance, insulation performance, chemical resistance, and vapor barrier property, can be obtained.

If the inorganic filler consists of a silicate compound, a nitride, and an inorganic oxide, the polyimide polybenzoxazole copolymer film with excellent thermal conductivity can be obtained.

The copolymer film can be manufactured, for example, by the following method:

Polymerize a diamine compound and a bisaminophenol compound with 1 mol of tetracarboxylic acid dihydrate by combining them at any ratio and using 1 mol, to obtain a polyamide acid (polyamic acid) which is a polyimide polybenzoxazole copolymer precursor (First Step);

Dissolve this polyamide acid in an organic solvent and add an inorganic filler to this organic solvent (Second Step);

Dry this mixture (polyamide acid solution with the inorganic filler) at low temperature (about 90 °C) to obtain a film (a polyimide polybenzoxazole copolymer precursor film) (Third Step); and

Complete dehydration and cyclization (imidization and conversion to oxazole) by heating this film (polyimide polybenzoxazole copolymer precursor film) to more than 200 °C or by using a catalyst, in order to obtain the polyimide polybenzoxazole copolymer film (Fourth Step).

Although the copolymer film becomes a film with the characteristics of both the above-mentioned polyimide film and the polybenzoxazole film, it has a larger molecular weight compared with the mixed film and becomes a strong film.

A seventeenth embodiment of the inorganic filler-containing material used as the raw material of the composite material according to the present invention, a polyimide polybenzoxazole copolymer film is a varnish consisting of a polyimide polybenzoxazole copolymer precursor solution which copolymerized a polyamide acid and a polyamide acid with a phenol region, and containing an inorganic filler.

The varnish consisting of this copolymer precursor solution (hereinafter, referred to as the copolymer varnish) can be manufactured by the above-mentioned first and second steps of the method of manufacturing the copolymer film.

That is, this copolymer varnish can be obtained in the process (intermediate steps) of manufacturing the polyimide polybenzoxazole copolymer film.

The copolymer varnish has characteristics of the above-mentioned polyimide varnish and polybenzoxazole varnish.

This copolymer varnish contains the inorganic filler and thus it can be stored at room temperature and has excellent storage stability.

That is, as mentioned above, if a conventional polyimide polybenzoxazole copolymer varnish is stored at room temperature, polyamide acid is depolymerized to acid anhydride and aromatic amine, and amide-exchange reaction between the produced acid anhydride and an amino group of other molecular chains decreases their average molecular weight and accordingly causes deterioration of adhesiveness, etc.

However, since the copolymer varnish contains the inorganic filler, the above-mentioned depolymerization of the polyamide acid is prevented and the average molecular weight is less likely to decrease, leading to the polyimide polybenzoxazole copolymer varnish which can be stored at room temperature and has excellent storage stability.

The copolymer varnish is applied to an object and then imidized and converted to an oxazole by heating, thereby allowing a polyimide polybenzoxazole copolymer membrane to be formed on an outer surface of the object.

As mentioned above, the copolymer varnish contains the inorganic filler. Therefore, the polyimide polybenzoxazole copolymer membrane obtained by applying the polyimide polybenzoxazole copolymer precursor solution to the object and heating it can demonstrate the high heat resistance of the inorganic filler.
Furthermore, by selecting the inorganic filler appropriately, it is possible to obtain a polyimide polybenzoxazole copolymer membrane maintaining the original excellent characteristics of the polyimide polybenzoxazole copolymer and having its insufficient characteristics (such as thermal conductivity and vapor barrier property etc.) improved.

If the inorganic filler consists of clay (especially, plate crystal clay), a polyimide membrane with excellent seal performance, insulation performance, chemical resistance, and vapor barrier property, can be obtained.

If an inorganic filler consists of a silicate compound, a nitride, and an inorganic oxide, a polyimide polybenzoxazole copolymer membrane with excellent thermal conductivity can be obtained.

An eighteenth embodiment of the inorganic filler-containing material used as the raw material of the composite material according to the present invention is an incompletely-imidized and - converted-to-oxazole and self-standing (self-supporting) polyimide polybenzoxazole copolymer precursor film obtained by drying a polyimide polybenzoxazole copolymer precursor solution containing an inorganic filler.

The eighteenth embodiment of the raw material of the composite material according to the present invention, the polyimide polybenzoxazole copolymer precursor film (hereinafter, referred to as the copolymer precursor film), can be manufactured by the above-mentioned first to third steps of the method of manufacturing the copolymer film.

That is, this copolymer precursor film can be obtained in the process (intermediate steps) of manufacturing the copolymer film.

The copolymer precursor film contains the inorganic filler and thus it can be stored at room temperature and has excellent storage stability.

That is, as mentioned above, if a conventional polyimide polybenzoxazole copolymer precursor film is stored at room temperature, polyamide acid is depolymerized to acid anhydride and aromatic amine, and amide-exchange reaction between the produced acid anhydride and an amino group of other molecular chains decreases their average molecular weight and accordingly causes deterioration of adhesiveness or embrittlement of the film.

However, since the copolymer precursor film contains the inorganic filler, the above-mentioned depolymerization of the polyamide acid is prevented and the average molecular weight is less likely to decrease, leading to a polyimide polybenzoxazole copolymer precursor film which can be stored at room temperature and has excellent storage stability.

The copolymer precursor film has an adhesive property in itself and thus can be used as an adhesive film.
Therefore, after this copolymer precursor film adheres to an object and then is imidized and converted to an oxazole by heating, a polyimide polybenzoxazole copolymer membrane can be formed on an outer surface of the object.

As described above, this copolymer precursor film contains the inorganic filler. Therefore, the polyimide polybenzoxazole copolymer membrane obtained by bonding the polyimide polybenzoxazole copolymer precursor film to the object and heating it can demonstrate the high heat resistance of the inorganic filler. Furthermore, by selecting the inorganic filler appropriately, it is possible to obtain a polyimide polybenzoxazole copolymer membrane maintaining the original excellent characteristics of polyimide and having its insufficient characteristics (such as thermal conductivity and vapor barrier property etc.) improved.

If the inorganic filler consists of clay (especially, plate crystal clay), a polyimide polybenzoxazole copolymer membrane with excellent seal performance, insulation performance, chemical resistance, and vapor barrier property, can be obtained.

If the inorganic filler consists of a silicate compound, a nitride, and an inorganic oxide, a polyimide polybenzoxazole copolymer membrane with excellent thermal conductivity can be obtained.

The composite material according to the present invention is composed of an inorganic filler-containing material of the above-mentioned first to eighteenth embodiments and a molding consisting of expanded graphite, organic fiber, or inorganic fiber.

In particular, the composite material includes a composite material (first example) in which any of a layer of polyimide resin, a layer of polybenzimidazole resin, a layer of the mixture of polyimide resin and polybenzimidazole resin, a layer of polybenzoxazole resin, a layer of the mixture of polyimide resin and polybenzoxazole resin, or a layer of copolymer resin of polyimide and polybenzimidazole, containing the above-mentioned inorganic filler (hereinafter, referred to as an inorganic filler-containing layer) is provided on outer surface of the above-mentioned molding, and a composite material (the second example) which contains any of a polyimide resin, polybenzimidazole resin, a mixed resin of polyimide resin and polybenzimidazole resin, a polybenzoxazole resin, a mixed resin of polyimide resin and polybenzoxazole resin, or a copolymer resin of polyimide and polybenzimidazole, containing the above-mentioned inorganic filler (hereinafter, referred to as inorganic filler mixing resin) inside the above-mentioned molding.

A shape of the molding includes but is not particularly limited to, for example, sheet (including film), ring, or string (including thread) shape, etc.

The molding consisting of expanded graphite can be obtained by once preparing an intercalation compound by reaction of a graphite powder, such as a natural graphite, pyrolytic graphite, or kish graphite as a raw material with a concentrated sulfuric acid or concentrated nitric acid, etc., then obtaining a residual compound through water washing, etc., and molding (compression molding, etc.) a flexible expanded graphite obtained by rapidly heating and expanding the residual compound into a necessary shape.

One or more inorganic fibers selected from a group consisting of ceramic fiber, glass fiber, SiC fiber, carbon fiber, sepiolite, and rock wool can be suitably used as inorganic fiber.

The molding consisting of inorganic fiber includes a film or sheet, etc. formed of the inorganic fiber, and for example, an inorganic fiber paper is used.

One or more organic fiber selected from a group consisting of acrylic fiber, aramid fiber, polyester fiber, vinylon, polyimide fiber, polyamidoimide fiber, polybenzimidazole fiber, and polybenzoxazole fiber can be suitably used as organic fiber.

The molding consisting of organic fiber includes a film or sheet, etc. formed of the organic fiber, and for example, an organic fiber paper is used.

The above-mentioned composite material of the first example can be formed by any of the following three methods (A)-(C);
(A) Laminate (attach) any of the polyimide film, the polybenzimidazole film, the polybenzoxazole film, mixed film 1, mixed film 2, mixed film 3, mixed film 4, or the copolymer film on an outer surface of the molding;
(B) Apply any of the polyimide varnish, the polybenzimidazole varnish, the polybenzoxazole varnish, mixed varnish 1, mixed varnish 2, or the copolymer varnish to an outer surface of the molding, and then heat or bake the varnish to form any of a polyimide membrane, a polybenzimidazole membrane, a polybenzoxazole membrane, a mixed membrane of the polyimide and polybenzimidazole, a mixed membrane of the polyimide and polybenzoxazole, or a copolymer membrane of the polyimide and polybenzoxazole;
(C) bond any of the polyimide precursor film, the polyazomethine film, the polybenzoxazole precursor film, mixed film 2, mixed film 4, or the copolymer precursor film to an outer surface of the molding, and then heat or bake the film to form any of a polyimide membrane, a polybenzimidazole membrane, a polybenzoxazole membrane, a mixed membrane of the polyimide and the polybenzimidazole, a mixed membrane of the polyimide and the polybenzoxazole, or a copolymer membrane of the polyimide and the polybenzoxazole.

The composite material of the above-mentioned second example can be formed by the following method;
impregnate any of the polyimide varnish, the polybenzimidazole varnish, the polybenzoxazole varnish, mixed varnish 1, mixed varnish 2, or the copolymer varnish inside the molding, and then heat or bake the varnish to form any of a polyimide resin, a polybenzimidazole resin, a polybenzoxazole resin, a mixed resin of the polyimide and the polybenzimidazole, a mixed resin of the polyimide and the polybenzoxazole, and a copolymer resin of the polyimide and the polybenzoxazole.

The composite material according to the first example of the present invention can provide a molding with excellent heat resistance and filler-containing performance since it is a composite material in which an inorganic filler-containing layer is provided on outer surface of the molding.

If a molding consists of expanded graphite, a composite material can be obtained, wherein the composite material has high heat resistance of the expanded graphite, prevents powder fall which is a disadvantage of the expanded graphite, and has excellent filler-containing performance which the expanded graphite does not have.

If a molding consists of inorganic fiber, a composite material with excellent heat resistance can be obtained.

If a molding consists of an organic fiber, a composite material with excellent flexibility can be obtained.

If an inorganic filler consists of a clay, a composite material with excellent seal performance, filler-containing performance, chemical resistance, and vapor barrier property can be obtained. Moreover, when an inorganic filler consists of a silicate compound, nitride, and inorganic oxide, a composite material with excellent thermal conductivity can be obtained.

The composite material according to the second example of the present invention can provide a molding with excellent heat resistance since it is a composite material in which an inorganic filler-containing layer is included inside the molding.

If a molding consists of expanded graphite, a composite material with excellent thermal conductivity can be obtained.

If a molding consists of inorganic fiber, a composite material with excellent heat resistance can be obtained.

If a molding consists of an organic fiber, a composite material with excellent flexibility can be obtained.

If an inorganic filler consists of a clay, a composite material with excellent seal performance, filler-containing performance, chemical resistance, and vapor barrier property can be obtained. Moreover, when an inorganic filler consists of a silicate compound, nitride, and inorganic oxide, a composite material with excellent thermal conductivity can be obtained.

The composite material according to the present invention is suitably used, for example for a seal material or heat dissipation sheet. If the composite material is used as a seal material, the type of composite material is not particularly limited and it includes both static seal material (seal material for fixation) and dynamic seal material (material for dynamic seal). In particular, a gasket or packing, etc. can be examples for seal material. Moreover, the shape or size of the seal material is not particularly limited and it can be suitably set depending on its usage.

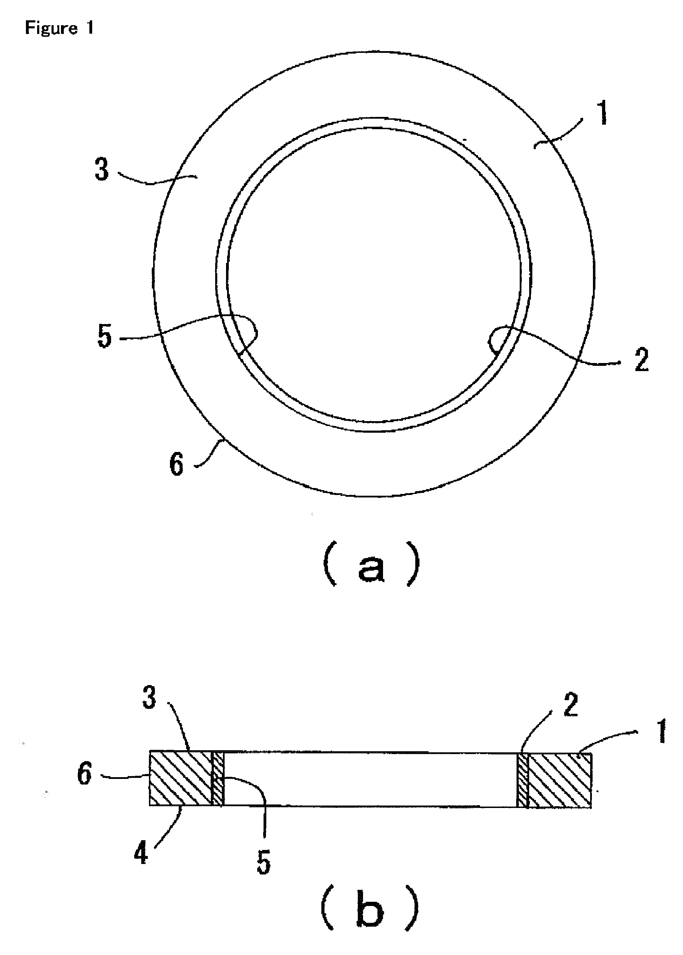

Fig. 1 shows a seal material which is an example of the composite material according to the present invention, and (a) is a top view and (b) is a longitudinal sectional view.

The seal material of the illustrative example is provided with an inorganic filler-containing layer 2, containing an inorganic filler, on an outer surface (inside surface) of a molding 1 molded in a ring shape. The molding 1 consists of any of the above-mentioned expanded graphite, inorganic fiber, or organic fiber.

In addition, an outer surface of the molding 1 comprises a front side surface 3, a back side surface 4, an inside surface 5, and an outside surface 6, and the seal material consisting of the composite material according to the present invention is provided with an inorganic filler-containing layer 2 on at least one or more outer surfaces of these surfaces.

For example, if a seal material is a gland packing as illustrated, it is possible to improve its seal performance by providing on the inside surface 5 which contacts with a valve rod the inorganic filler-containing layer 2 containing an inorganic filler such as a clay, can be improved.

The inorganic filler-containing layer 2 can be formed by any of the following three methods (A)-(C);
(A) Laminate (attach) any of the polyimide film, the polybenzimidazole film, the polybenzoxazole film, mixed film 1, mixed film 2, mixed film 3, mixed film 4, or the copolymer film on outer surface of the molding;
(B) Apply any of the polyimide varnish, the polybenzimidazole varnish, the polybenzoxazole varnish, mixed varnish 1, mixed varnish 2, or the copolymer varnish to an outer surface of the molding, and then heat or bake the varnish to form any of a polyimide membrane, a polybenzimidazole membrane, a polybenzoxazole membrane, a mixed membrane of the polyimide and the polybenzimidazole, a mixed membrane of the polyimide and the polybenzoxazole, or a copolymer membrane of the polyimide and the polybenzoxazole;
(C) bonding any of the polyimide precursor film, the polyazomethine film, the polybenzoxazole precursor film, mixed film 2, mixed film 4, or the copolymer precursor film to an outer surface of the molding, and then heat or bake the film to form any of a polyimide membrane, a polybenzimidazole membrane, a polybenzoxazole membrane, a mixed membrane of the polyimide and the polybenzimidazole, a mixed membrane of the polyimide and the polybenzoxazole, or a copolymer membrane of the polyimide and the polybenzoxazole.

The seal material can also be a multilayer structure.

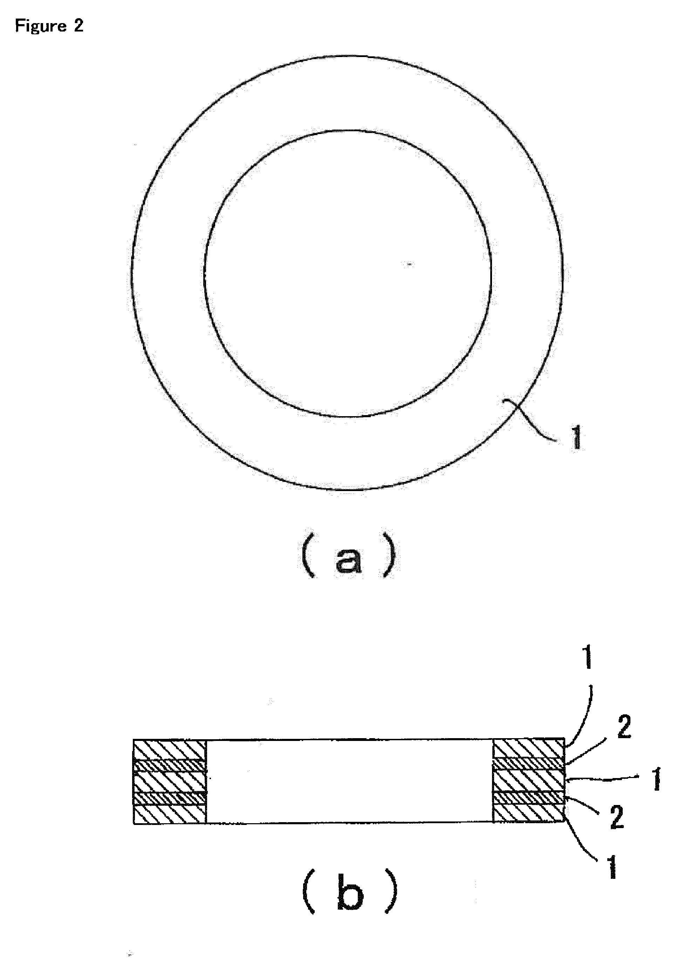

Fig. 2 shows a seal material consisting of a composite material according to the present invention in the form of the multilayer structure, and (a) is a top view and (b) is a longitudinal sectional view.

The seal material of the illustrative example is provided with several layers of the moldings 1 molded in a ring shape and inorganic filler-containing layers 2 between the layers of the moldings 1. Thus, it is possible to further improve its seal performance by providing the inorganic filler-containing layer 2 containing an inorganic filler such as a clay between the layers of the moldings 1.

The number of layers of lamination is three in the illustrative example, but it may not be limited to three, and it may be two or four or more.

The second example of the seal material consisting of the composite material according to the present invention is a seal material consisting of a composite material which contains an inorganic filler-containing resin inside a molding consisting of any of expanded graphite, organic fiber, or inorganic fiber.

Such seal material can be obtained by impregnating any of the polyimide varnish, the polybenzimidazole varnish, the polybenzoxazole varnish, mixed varnish 1, mixed varnish 2, or the copolymer varnish inside the molding, and then heating or baking the impregnated varnish.

More particularly, it can be manufactured by mixing any of the polyimide varnish, the polybenzimidazole varnish, the polybenzoxazole varnish, mixed varnish 1, mixed varnish 2, or the copolymer varnish with, for example, expanded graphite powder, inorganic fiber, or organic fiber, and then heat-molding this mixture using molding equipment, such as a die. Alternatively, it can be also manufactured by immersing a mold consisting of expanded graphite, inorganic fiber, or organic fiber fabricated in a sheet shape in any of the polyimide varnish, the polybenzimidazole varnish, the polybenzoxazole varnish, mixed varnish 1, mixed varnish 2, or the copolymer varnish, and then heat-molding the immersed varnish using molding equipment, such as a die.

If a seal material is a gland packing, it can be manufactured by coating yarns before braiding with the polyimide film or the polyimide precursor film or the polybenzimidazole film or the polyazomethine film or the polybenzoxazole film or the polybenzoxazole precursor film or mixed film 1 or mixed film 2 or mixed film 3 or mixed film 4 or the copolymer film or the copolymer precursor film, or impregnating the polyimide varnish, the polybenzimidazole varnish, the polybenzoxazole varnish, mixed varnish 1, mixed varnish 2, or the copolymer varnish in the yarn before braiding, and then heat-molding the impregnated varnish.

As described above, the seal material consisting of the composite material according to the present invention consists of a composite material having an inorganic filler-containing layer on an outer surface of the molding or a composite material having an inorganic filler-containing resin inside the molding.

Therefore, if a molding consists of expanded graphite, a seal material can be obtained, wherein the seal material has the same high heat resistance as the seal material made from the expanded graphite, prevents powder fall or electric corrosion which is a disadvantage of the seal material made from the expanded graphite, and has excellent filler-containing performance which the expanded graphite does not have. Accordingly it can be used as a substitute for the conventional seal materials made from asbestos.

If a molding consists of inorganic fiber, a seal material with excellent heat resistance can be obtained.

If a molding consists of organic fiber, a seal material with excellent flexibility can be obtained.

If an inorganic filler contains a plate crystal, such as a boron nitride, etc., a seal material (packing) with excellent seal performance and a low friction coefficient (low slide resistance) can be obtained.

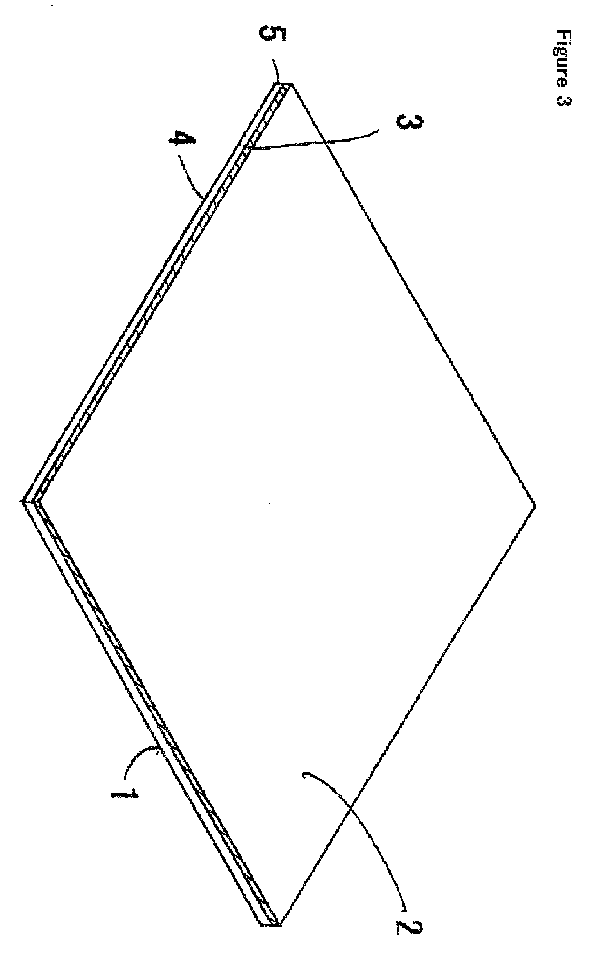

Fig. 3 is a perspective view showing a heat dissipation sheet which is an example of the composite material according to the present invention.

The heat dissipation sheet of the illustrative example is provided with an inorganic filler-containing layer 2 on outer surface of a sheet-like molding (hereinafter, referred to as the Sheet) 1 which is molded in a square shape.

Additionally, outer surface of the molding 1 comprises a front side surface 3, a back side surface 4, and an outside surface 6, and the heat dissipation sheet consisting of the composite material according to the present invention is provided with an inorganic filler-containing layer 2 on at least one or more outer surfaces of these surfaces.

The inorganic filler-containing layer 2 can be formed by any of the following three methods (A)-(C);
(A) Laminate (attach, etc) any of the polyimide film, the polybenzimidazole film, the polybenzoxazole film, mixed film 1, mixed film 2, mixed film 3, mixed film 4, or the copolymer film on an outer surface of the Sheet;
(B) Apply any of the polyimide varnish, the polybenzimidazole varnish, the polybenzoxazole varnish, mixed varnish 1, mixed varnish 2, or the copolymer varnish to an outer surface of the Sheet, and then heat or bake the varnish to form any of a polyimide membrane, a polybenzimidazole membrane, a polybenzoxazole membrane, a mixed membrane of the polyimide and the polybenzimidazole, a mixed membrane of the polyimide and the polybenzoxazole, or a copolymer membrane of the polyimide and the polybenzoxazole;
(C) bond any of the polyimide precursor film, the polyazomethine film, the polybenzoxazole precursor film, mixed film 2, mixed film 4, or the copolymer precursor film to an outer surface of the Sheet, and then heat or bake the film to form any of a polyimide membrane, a polybenzimidazole membrane, a polybenzoxazole membrane, a mixed membrane of the polyimide and the polybenzimidazole, a mixed membrane of the polyimide and the polybenzoxazole, or a copolymer membrane of the polyimide and the polybenzoxazole.

The heat dissipation sheet consisting of the composite material according to the present invention consists of a composite material having an inorganic filler-containing layer on an outer surface of the molding.

If the molding consists of expanded graphite, a heat dissipation sheet can be obtained, where the heat dissipation sheet prevents powder fall from the expanded graphite and has filler-containing performance which the expanded graphite does not have.

If a molding consists of inorganic fiber, a heat dissipation sheet with excellent heat resistance can be obtained.

If a molding consists of organic fiber, a heat dissipation sheet with excellent flexibility can be obtained.

Moreover, if the inorganic filler-containing layer 2 is formed of a polyimide membrane, a polybenzimidazole membrane, a polybenzoxazole membrane, a mixed membrane of polyimide and polybenzimidazole, a mixed membrane of polyimide and polybenzoxazole, or a copolymer membrane of polyimide and polybenzoxazole, obtained by applying any of the polyimide varnish, the polybenzimidazole varnish, the polybenzoxazole varnish, mixed varnish 1, mixed varnish 2, or the copolymer varnish to an outer surface of the Sheet, and then heating or baking the varnish; or of a polyimide membrane, a polybenzimidazole membrane, a polybenzoxazole membrane, a mixed membrane of polyimide and polybenzimidazole, a mixed membrane of polyimide and polybenzoxazole, or a copolymer membrane of polyimide and polybenzoxazole, obtained by bonding any of the polyimide precursor film, the polyazomethine film, the polybenzoxazole precursor film, mixed film 2, mixed film 4, or the copolymer precursor film to an outer surface of the Sheet and then heating the film, the inorganic filler-containing layer 2 exerts a function as an adhesive for bonding the sheet to other materials, thus pressure sensitive adhesive and double-sided adhesive tapes are not required for attaching the sheet to a circuit board, etc., and a heat dissipation sheet with excellent heat dissipation performance can be obtained.

### Industrial Applicability

The composite material according to the present invention is suitably employed for a seal material, such as a gasket or a packing, or a heat dissipation sheet, etc. used for a liquid crystal television or a personal computer, etc.

### Description of Reference Numerals

1 Molding
2 Inorganic Filler-containing Layer
   (polyimide layer, polybenzimidazole layer, polybenzoxazole layer, mixed layer of polyimide and polybenzimidazole, mixed layer of polyimide and polybenzoxazole, or copolymer layer of polyimide and polybenzoxazole, containing inorganic filler)
3 Outer Surface of Molding (Front Side Surface)
4 Outer Surface of the Molding (Back Side Surface)
5 Outer Surface of the Molding (Inside Surface)
6 Outer Surface of the Molding (Outside Surface)

## Claims

1. A composite material composed of;
inorganic filler-containing materials containing an inorganic filler and any of the following: a polyimide film, a polyimide varnish consisting of a polyamide acid solution, an incompletely-imidized and self-standing polyimide precursor film obtained by drying the polyamide acid solution, a polybenzimidazole film, a varnish consisting of a polybenzimidazole solution, a polyazomethine film, a mixed film consisting of a polyimide resin and a polybenzimidazole resin, a mixed varnish consisting of the polyamide acid solution and the polybenzimidazole solution, a mixed film consisting of a polyimide precursor and polyazomethine, a polybenzoxazole film, a polybenzoxazole varnish consisting of a polyamide acid solution having phenol region, an incompletely-converted-to-oxazole and self-standing polybenzoxazole precursor film obtained by drying the varnish consisting of the polyamide acid solution having phenol region, a mixed film consisting of the polyimide resin and the polybenzoxazole resin, a mixed varnish consisting of the polyamide acid solution and a polybenzoxazole precursor solution, a mixed film consisting of the polyimide precursor and a polybenzoxazole precursor, a polyimide-polybenzoxazole copolymer film obtained by copolymerizing the polyimide resin and the polybenzoxazole resin, a varnish consisting of a polyimide-polybenzoxazole copolymer precursor solution which copolymerized the polyamide acid and the polyamide acid having phenol region, an incompletely-imidized and -converted-to-oxazole and self-standing polyimide-polybenzoxazole copolymer precursor film obtained by drying the polyimide-polybenzoxazole copolymer precursor solution;
and a molding consisting of any of expanded graphite, organic fiber, or inorganic fiber.

2. The composite material of claim 1, wherein an inorganic filler containing layer formed of said inorganic filler-containing material is provided on outer surface of said molding.

3. A composite material comprising an inorganic filler-containing material inside a molding consisting of any of expanded graphite, organic fiber, or inorganic fiber, wherein the inorganic filler-containing material contains an inorganic filler and any of the following: a polyimide varnish consisting of a polyamide acid solution, a varnish consisting of a polybenzimidazole solution, a mixed varnish consisting of the polyamide acid solution and the polybenzimidazole solution, a polybenzoxazole varnish consisting of a polyamide acid having phenol region, a mixed varnish consisting of the polyamide acid solution and a polybenzoxazole precursor solution, a varnish consisting of a polyimide-polybenzoxazole copolymer precursor solution which copolymerized the polyamide acid and the polyamide acid having phenol region.

4. The composite material of any of claims 1 to 3, wherein said inorganic filler consists of clay.

5. The composite material of any of claims 1 to 3, wherein said inorganic filler consists of a silicate compound.
